(19) **Europäisches Patentamt**

**European Patent Office**

**Office européen des brevets**

(11) **EP 0 847 481 B1**

(12) **EUROPÄISCHE PATENTSCHRIFT**

(45) Veröffentlichungstag und Bekanntmachung des Hinweises auf die Patenterteilung:
**31.10.2001 Patentblatt 2001/44**

(51) Int Cl.7: **F01B 9/02**, F16H 21/44, F16H 21/36

(21) Anmeldenummer: **97923005.9**

(22) Anmeldetag: **07.05.1997**

(86) Internationale Anmeldenummer:
**PCT/EP97/02341**

(87) Internationale Veröffentlichungsnummer:
**WO 97/47860 (18.12.1997 Gazette 1997/54)**

(54) **HUBKOLBENMASCHINE MIT EINEM HYPOZYKLOIDEN-KOLBENHUBGETRIEBE MIT WATT'SCHER FÜHRUNG, INSBESONDERE MIT KOLBEN IN GEGENÜBERLIEGENDEN ZYLINDERN**

PISTON ENGINE WITH A HYPOCYCLOID PISTON STROKE GEAR WITH WATT GUIDE, ESPECIALLY WITH PISTONS IN OPPOSED CYLINDERS

MOTEUR A PISTONS ALTERNATIFS A REDUCTEUR DE COURSE DE PISTON A HYPOCYCLOIDES AVEC UN GUIDE DE WATT, NOTAMMENT AVEC DES PISTONS SITUES DANS DES CYLINDRES OPPOSES

(84) Benannte Vertragsstaaten:
**DE ES FR GB IT**

(30) Priorität: **13.06.1996 DE 19623552**

(43) Veröffentlichungstag der Anmeldung:
**17.06.1998 Patentblatt 1998/25**

(73) Patentinhaber: **Bayerische Motoren Werke Aktiengesellschaft**
**80788 München (DE)**

(72) Erfinder:
• **FISCHER, Gert**
**D-82340 Feldafing (DE)**
• **HOEHL, Johannes**
**D-82216 Maisach (DE)**

(74) Vertreter: **Bücken, Helmut et al**
**Bayerische Motoren Werke Aktiengesellschaft**
**Patentabteilung AJ-3**
**80788 München (DE)**

(56) Entgegenhaltungen:
**WO-A-92/17694          DE-A- 3 723 950**
**DE-A- 19 504 890        US-A- 4 779 472**

**Beschreibung**

Die Erfindung geht gemäß dem Oberbegriff des Patentanspruches 1 von der DE-A 41 08 311 aus.

Bekanntlich beschreibt der Koppelmittelpunkt einer Watt'schen Führung nur mit Koppel-Lenkern von unendlicher Länge eine exakte Geradführungsbahn, wogegen bei realen Lenkern von insbesondere kurzen Längen, wie beispielsweise an einer Hubkolbenmaschine, der Koppelmittelpunkt über dem Gesamthub der oszillierenden Koppel eine zur fiktiven bzw. ideellen Führungsgeraden mehrfach gekrümmte und diese Führungsgerade wechselnde Bahnkurve beschreibt.

Der Aufsatz "Berechnung Watt'scher Geradführungsgetriebe" in Heft 1/1980 der DDR-Zeitschrift "Maschinenbautechnik" zeigt insbesondere anhand eines auf Seite 27 dargestellten Nomogramms Möglichkeiten auf, eine derartige Bahnkurve in ihren Abweichungen und Verläufen je nach Einsatzzweck der Watt'schen Führung in Abhängigkeit von deren Getriebeparametern der gewünschten Qualität an Geradführung anzupassen. Ein Hauptziel hierbei ist, die Querabweichungen der Bahnkurve des Koppelmittelpunktes von der fiktiven bzw. ideellen Führungsgeraden zu minimieren und die Abweichungen zu vergleichmäßigen.

Wie sich gezeigt hat, führt eine derartige Auslegung einer in einem Hypozykloiden-Kolbenhubgetriebe verwendeten Watt'schen Führung zu Querverlangerungen des mit einer Kolbenschubstange antriebsverbundenen Hubexzenters von derart unterschiedlichen Ausmaßen, daß jede Kolbenführung nachteilig beeinflußt ist.

Der Erfindung liegt die Aufgabe zugrunde, bei einer gattungsgemäßen Hubkolbenmaschine mit einem Hypozykloiden-Kolbenhubgetriebe mit Watt'scher Führung den Bewegungsverlauf des Hubexzenters quer zu seiner Bewegungsbahn derart zu verbessern, daß betragsmäßig etwa gleich große Querverlagerungen des Hubexzenters und damit auch des mit ihm verbundenen Kolbens über den Kolbenhub erzielt sind.

Diese Aufgabe ist mit dem Patentanspruch 1 gelöst.

Mit der Erfindung werden in vorteilhafter Weise die insbesondere bezüglich der Beträge nach sehr unterschiedlichen Querabweichungen des mit der Kolben-Schubstange antriebsverbundenen Hubexzenters vergleichmäßigt auf ein vorteilhaft wählbares Maß an Querabweichung, womit der Einfluß auf eine Querverlagerung/Schiefstellung des Kolbens im jeweiligen Zylinder wesentlich reduziert ist. Erreicht ist dies durch einen gezielt abweichenden Bahnverlauf des Koppelmittelpunktes und damit des Führungsexzenter-Mittelpunktes mit einer größtmöglichen Abweichung im jeweiligen Umkehrpunkt der Koppel allein mittels einer gegenüber dem bekannten Stand der Technik erfindungsgemäß anderen Abstimmung der Parameter der Watt'schen Führung.

Als vorteilhaft dominanter Parameter der Watt'schen Führung wurde für die Erfindung die Länge der Lenker erkannt, die sich bei Null-Lage der Watt'schen Koppel mit im Schnittpunkt von Führungsbahn und Hubexzenter- bzw. Kolbenbahn befindlichem Mittelpunkt $M_{FE}$ des Führungsexzenters und zur Hubexzenterbahn im wesentlichen parallel gerichteten Lenkern ergibt zu:

$$L_{Lenker} = h + 0{,}17765 \times s \times (4 \times h/s)^{-1,0335},$$

wobei s = Kolbenhub ist und h = Abstand eines gehäuseseitigen Lenker-Drehpunktes von der Führungsbahn, und ferner als Definitionsbereich gilt: $3{,}5 \leq (4 \times h/s) \leq 15$.

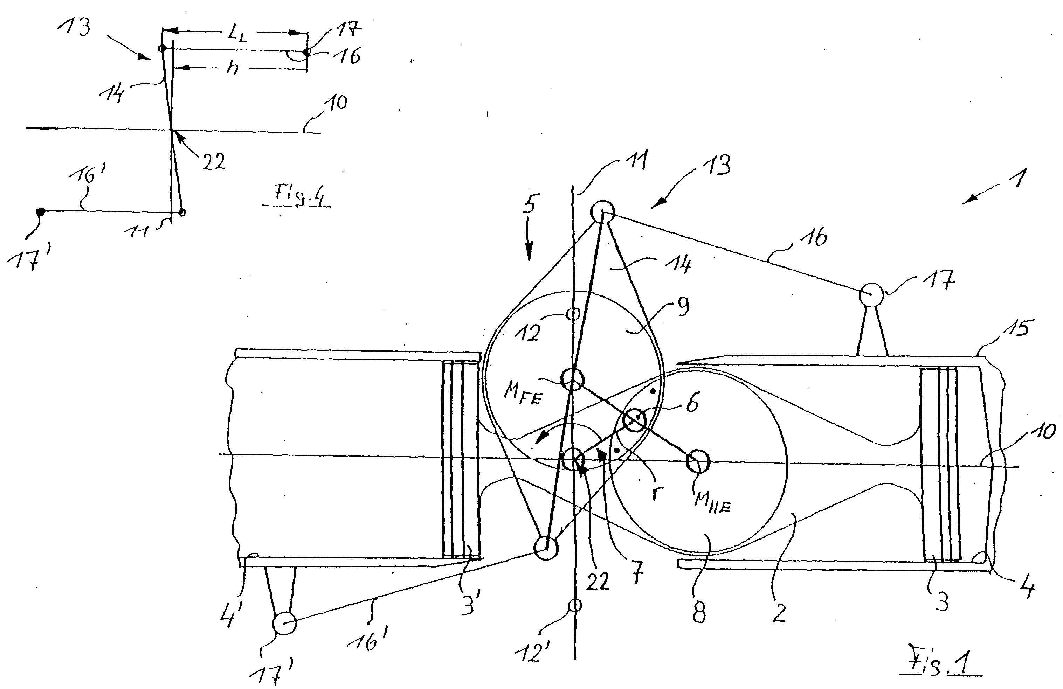

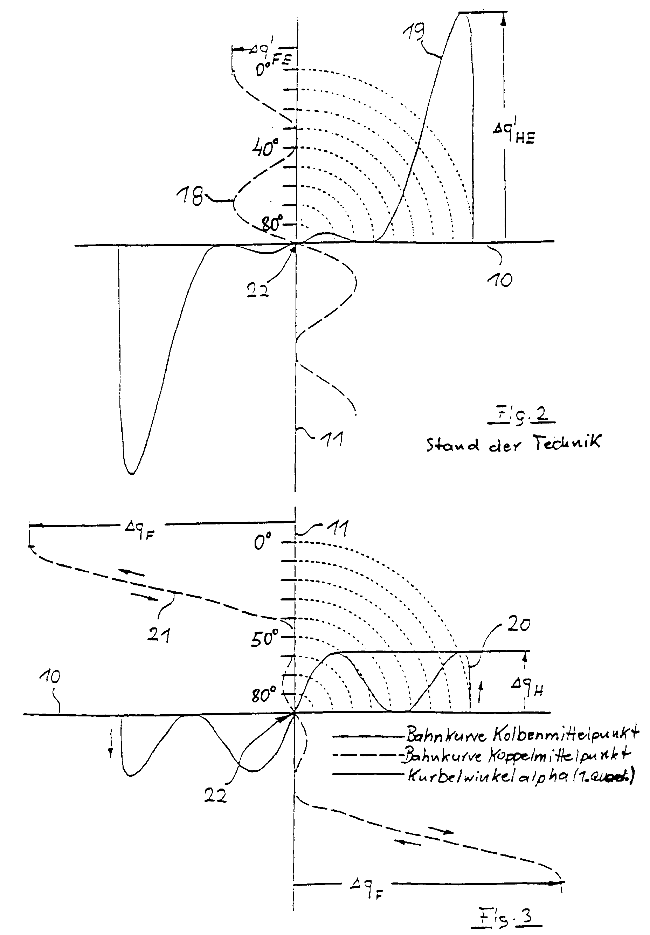

Die erfindungsgemäße Formel für die Länge der Lenker der Watt'schen Koppel ermöglicht in vorteilhafter Weise mit lediglich zwei vorgebbaren Konstruktionsdaten einer gattungsgemäßen Hubkolbenmaschine eine erfindungsgemäße Auslegung der Watt'schen Führung bei Einsatz in einem Hypozykloiden-Kolbenhubgetriebe. Kennzeichen der erfindungsgemäßen Auslegung ist ein möglichst gerader Bahnverlauf mit vergleichmäßigten Querabweichungen von geringem Betrag des mit der Kolben-Schubstange antriebsverbundenen Hubexzenters, erzielt durch extreme Querabweichungen von der ideellen bzw. fiktiven Führungsbahn in Nahbereichen seiner Umkehrpunkte des mit dem Hubexzenter um den Hubzapfen der Kurbelwelle drehfest verbundenen Führungsexzenters durch die Watt'sche Koppel (Figur 3).

Die Erfindung ist anhand einer in der Zeichnung schematisch dargestellten Hubkolbenmaschine beschrieben. Es zeigt

Figur 1      eine Hubkolbenmaschine in Flachbauart mit einem Hypozykloiden-Kolbenhubgetriebe mit Watt'scher Führung,

Figur 2      den Bahnverlauf des Hubexzenters bei Auslegung nach dem Stand der Technik

Figur 3      den Bahnverlauf des Hubexzenters bei erfindungsgemäßer Auslegung, und

Figur 4      eine Schema der Watt'schen Geradführung mit Auslegungsdaten.

Eine vorzugsweise in Flachbauart ausgebildete Hubkolbenmaschine 1, insbesondere Brennkraftmaschine, umfaßt über eine gemeinsame Schubstange 2 verbundene Kolben 3, 3' in gegenüberliegenden Zylindern 4, 4'. Ein schematisch dargestelltes Hypozykloiden-Hubgetriebe 5 umfaßt auf einem Hubzapfen 6 einer Kurbelwelle 7 jeweils drehbeweglich angeordnet einen Hubexzenter 8 und einen Führungsexzenter 9, die beide miteinander drehfest verbunden sind. Der Hubexzenter 8 ist in der Schubstange 2 drehbeweglich gelagert angeordnet und bewegt diese oszillierend entlang der Geraden 10, die zugleich die ideelle Hubexzenter-
bzw. Kolbenbahn ist.

Orthogonal zu der Hubexzenter- bzw. Kolbenbahn 10 ist eine für das Hypozykloiden-Hubgetriebe 5
typische Gerad-Führungsbahn 11 gerichet, längs der
der Führungsexzenter 9 zwischen den Umkehrpunkten
12, 12' oszilliert. Als Geradführungseinrichtung für den
Führungsexzenter 9 ist eine Watt'sche Führung 13 vorgesehen mit einer den Führungsexzenter 9 drehbeweglich aufnehmenden Koppel 14, die über am Maschinengehäuse 15 schwenkgelagerte Lenker 16, 16' geführt
ist. Die Lenker 16, 16' sind in gehäuseseitigen Drehpunkten 17, 17' schwenkbeweglich gelagert.

Bei einer nach dem Stand der Technik ausgelegten Watt'schen Führung 13 mit einem der ideellen
Gerad-Führungsbahn 11 optimiert angepaßten Bahnverlauf 18 mit $\Delta q'_{FE}$ des Koppelmittelpunktes bzw. des
Mittelpunktes $M_{FE}$ des Führungsexzenters 9 gemäß der
Figur 2 ergibt sich nach dieser Figur 2 für den Mittelpunkt $M_{HE}$ des Hubexzenters 8 ein Bahnverlauf 19 mit
insbesondere betragsmäßig sehr unterschiedlichen
Querverlagerungen $\Delta q'_{HE}$, die sich nachteilig auf die
Führungen der Kolben 3, 3' in den Zylindern 4, 4' auswirken.

Zur Erzielung betragsmäßig etwa gleich großer Querverlagerungen $\Delta q_H$ von gewünscht kleinem
Ausmaß für den Hubexzenter 8 gemäß dem Bahnverlauf 20 in Figur 3 sind Parameter der Watt'schen Führung 13 derart gewählt, daß dem orthogonal zur Hubexzenter- bzw. Kolbenbahn 10 oszillierenden Führungsexzenter 9 über jeden seinem jeweiligen Umkehrpunkt
12, 12' nahen Bewegungsbereich mittels der
Watt'schen Koppel 14 ein von der ideellen orthogonalen
Führungsbahn 11 derartig progressiv abweichender
Bahnverlauf 21 aufgezwungen ist, daß der Führungsexzenter 9 bei jedem Durchgang des Hubexzenters 8
durch den Schnittpunkt 22 der Führungsbahn 11 mit der
Hubexzenter- bzw. Kolbenbahn 10 von der ideellen
Führungsbahn 11 eine maximale Abweichung $\Delta q_F$ aufweist.

Diese umkehrpunktsnahe, gezielte Abweichung ist erfindungsgemäß über den Parameter der
Länge $L_L$ der Lenker 16, 16' erreicht, die sich bei Null-
Lage gemäß Figur 4 der Watt'schen Koppel 14 mit im
Schnittpunkt 22 von Führungsbahn und Hubexzenter-
bzw. Kolbenbahn 10 befindlichem Mittelpunkt $M_{FE}$ des
Führungsexzenters 9 und zur Hubexzenterbahn 10 im
wesentlich parallel gerichteten Lenkern 16, 16' ergibt
zu:

$$L_{Lenker} = h + 0{,}17765 \times s \times (4 \times h/s)^{-1{,}0035}$$

Hierbei bedeuten s = Kolbenhub und h = Abstand eines gehäuseseitigen Lenker-Drehpunktes 17,
17' von der Führungsbahn 11, wie dies aus der Schemazeichnung der Figur 4 weiter hervorgeht. Für die erfindungsgemäße Formel der Lenker-Länge $L_L$ gilt folgender Definitionsbereich:

$$3{,}5 \leq (4 \times h/s) \leq 15.$$

Bei einem beispielsweise gewählten Kurbelradius r = 20 Längeneinheiten (LE) für den Hubzapfen 6
der Hubkolbenmaschine 1 und einer damit festgelegten
Exzentrizität e = 20 (LE) für Hubexzenter 8 und Führungsexzenter 9 und einem daraus resultierenden Kolbenhub s = 4 x e = 80 LE ergibt der Abstand h eines
gehäuseseitigen Lenker-Drehpunktes 17, 17' von der
Führungsbahn 11 mit h ≥ 160 LE in die erfindungsgemäße Lenker-Längen-Formel $L_L$ eingesetzt für eine
Querabweichung $\Delta q_H$ des Hubexzenters 8 von der
Hubexzenter- bzw. Kolbenbahn 10 einen Wert von $\Delta q_H$
= ≤ 0,005 LE, wobei als weiterer Parameter der
Watt'schen Koppel 14 deren Länge mit $L_K$ ≥ 140 LE gewählt ist.

## Patentansprüche

1. Hubkolbenmaschine mit einem Hypozykloiden-Kolbenhubgetriebe mit Watt'scher Führung, insbesondere mit Kolben in gegenüberliegenden Zylindern,

   - wobei auf dem Hubzapfen (6) einer Kurbelwelle
     (7) ein mit einer Schubstange (2) eines in einem
     Zylinder (4, 4') geführten Kolbens (3, 3') antriebsverbundener Hubexzenter (8) sowie ein
     mittels der Watt'schen Führung (13) orthogonal
     zur Hubexzenter- bzw. Kolbenbahn (10) geführter Führungsexzenter (9) angeordnet sind,
     und

   - der mit dem Hubexzenter (8) drehfest verbundene Führungsexzenter (9) in einer über am
     Maschinengehäuse (15) schwenkgelagerte
     Lenker (16, 16) gesteuerten Watt'schen Koppel
     (14) drehgelagert ist,

     **dadurch gekennzeichnet,**

   - **daß** Parameter der Watt'schen Führung (13)
     derart gewählt sind,

   - **daß** dem orthogonal zur Hubexzenter- bzw.
     Kolbenbahn (10) oszillierenden Führungsexzenter (9) über jeden seinem jeweiligen Umkehrpunkt (12, 12') nahen Bewegungsbereich
     mittels der Watt'schen Koppel (14) ein von der
     ideellen orthogonalen Führungsbahn (11) derart progressiv abweichender Bahnverlauf (21)
     aufgezwungen ist, daß

   - der Führungsexzenter (9) bei jedem Durchgang des Hubexzenters (8) durch den Schnittpunkt (22) der ideellen orthogonalen Führungsbahn (11) mit der Hubexzenter- bzw. Kolbenbahn (10) von der ideellen orthogonalen Führungsbahn (11) eine maximale Abweichung ($\Delta q_F$) aufweist durch eine gewählte Länge ($L_L$) der Lenker (16, 16'), die

- sich bei Null-Lage der Watt'schen Koppel (14) mit im Schnittpunkt (22) von Führungsbahn (11) und Hubexzenter- bzw. Kolbenbahn (10) befindlichem Mittelpunkt ($M_{FE}$) des Führungsexzenters (9) und zur Hubexzenterbahn (10) im wesentlichen parallel gerichteten Lenkern (16, 16') ergibt zu:

$$L_{Lenker} = h + 0,17765 \times s \ (4 \times h/s)^{-1,0335},$$

wobei

- s = Kolbenhub ist und h= Abstand eines gehäuseseitigen Lenker-Drehpunktes (17, 17') von der Führungsbahn (11), und

- ferner als Definitionsbereich gilt: $3,5 \leq (4 \times h/s) \leq 15$.

2. Hubkolbenmaschine nach Anspruch 1, **dadurch gekennzeichnet,**

- **daß** mit einer gewählten Exzentrizität e = 20 (LE) und einem daraus resultierenden Kolbenhub s = 4 x e = 80 (LE) der Abstand h des gehäuseseitigen Lenker-Drehpunktes (17, 17') von der Führungsbahn (11) mit h ≥ 160 (LE) in die Lenker-Längen-Formel $L_L$ eingesetzt ist für eine Querabweichung des Hubexzenters (8) von der Hubexzenter- bzw. Kolbenbahn (10) $\Delta q_H \leq 0,005$ (LE),

- wobei die Länge der Watt'schen Koppel (14) mit $L_K \geq 140$ (LE) gewählt ist.

**Claims**

1. A reciprocating engine comprising a hypocycloid piston gear with Watt's guidance, especially with pistons in opposite cylinders,

- wherein an eccentric disc (8) connected for drive purposes to a connecting rod (2) of a piston (3, 3') guided in a cylinder (4, 4') together with a guide eccentric (9) guided at right angles to the eccentric-disc or piston path (10) by the Watt's guide (13) are disposed on the crank pin (6) of a crankshaft (7) and

- the guide eccentric (9) non-rotatably connected to the eccentric disc (8) is mounted for rotation in a Watt's linkage (14) controlled by control levers (16, 16) pivotably mounted on the engine casing (15),

**characterised in that**

- parameters of the Watt's guidance (13) are chosen so that

- a path travel (21) progressively deviating from the ideal orthogonal guide path (11) is imposed by the Watt's linkage (14) on the guide eccentric (9) oscillating at right angles to the eccentric-disc or piston travel (10) over each range of motion thereof near its respective reversal point (12, 12'), the progressive deviation being such that

- at each passage of the eccentric disc (8) through the point of intersection (22) between the ideal orthogonal guide path (11) and the eccentric-disc or piston path (10), the guide eccentric (9) has a maximum deviation ($\Delta q_F$) from the ideal orthogonal guide path (11) by means of a chosen length ($L_L$) of the control levers (16, 16') which

- at the zero position of the Watt's linkage (14) with the centre point ($M_{FE}$) of the guide eccentric (9) at the point of intersection (22) between the guide path (11) and the eccentric-disc or piston path (10) and when the control levers (16, 16') are substantially parallel to the eccentric-disc path (10), amounts to:

$$L_{control\ lever} = h + 0.17765 \times s \ (4 \times h/s)^{-1.0335},$$

wherein

- s = the piston stroke and h = the distance between the guide path (11) and a centre of rotation (17, 17') of the control lever on the casing side, and

- the definition range is $3.5 \leq (4 \times h/s) \leq 15$.

2. A reciprocating engine according to claim 1, **characterised in that**

- at a chosen eccentricity e = 20 (LE) and a resulting piston stroke s = 4 x e = 80 (LE) the distance h between the guide path (11) and the centre of rotation (17, 17') of the control lever on the casing side is h ≥ 160 (LE) inserted in the control-lever length formula $L_L$ for a trans-

verse deviation $\Delta q_H \leq 0.005$ (LE) of the eccentric disc (8) from the eccentric-disc or piston path (10),

- wherein the chosen length of the Watt's linkage (14) is $L_K \geq 140$ (LE).


## Revendications

1. Moteur à pistons linéaires comportant un entraînement de translation de piston, hypocycloïdal avec un guide de watt notamment des pistons dans des cylindres opposés, dans lequel :

   - le maneton (6) d'un vilebrequin (7) comporte un excentrique de translation (8) coopérant à l'entraînement avec une tige de piston (2) d'un piston (3, 3') guidé dans l'un des cylindres (4, 4') ainsi qu'un excentrique de guidage (9) guidé par un guide de Watt (13) perpendiculairement à la trajectoire de l'excentrique de translation ou du piston (10), et
   - l'excentrique de guidage (9) relié solidairement en rotation à l'excentrique de translation (8) est monté à rotation sur une bielle de Watt (14) commandée par un bras (16, 16') monté pivotant sur le corps (15) du moteur,

   **caractérisé en ce que**

   - on choisit le paramètre du guide de Watt (13) pour que
   - l'excentrique de guidage (9) qui oscille perpendiculairement à la trajectoire de l'excentrique de translation ou du chemin de piston (10) soit forcé par chaque plage de mouvements proche de son point d'inversion respectif (12, 12'), par la bielle de Watt (14) suivant un trajet (21) déviant progressivement du chemin de guidage orthogonal idéal (11),
   - l'excentrique de guidage (9) à chaque passage de l'excentrique de translation (8) dans le point d'intersection (22) du chemin de guidage orthogonal idéal (11) avec la trajectoire du piston ou de l'excentrique de translation (10) présente une déviation maximale ($\Delta q_F$) par rapport au chemin de guidage orthogonal idéal (11), grâce à une longueur choisie ($L_L$) des bras (16, 16') qui,
   - pour le passage en position zéro de la bielle de Watt (14), avec le centre ($M_{FE}$) de l'excentrique de guidage (9) placé au point d'intersection (22) du chemin de guidage (11) et de la trajectoire de piston ou d'excentrique de translation (10), et avec les bras essentiellement parallèles à la trajectoire de l'excentrique de translation (10), et donné par

$$L_L = h + 0,17765 \times s \times (4 \times h/s)^{-1,0335}$$

et dans cette formule (s) représente la course du piston et (h) la distance d'un point de rotation de bras (17, 17') du côté du boîtier par rapport à la trajectoire de guidage (11), et

- en outre comme domaine de définition on a :

$$3,5 \leq (4 \times h/s) \leq 15$$

2. Moteur à pistons linéaires selon la revendication 1, **caractérisé en ce que**

   - avec une excentricité choisie e = 20 (LE) et une course de piston qui en résulte s = 4 x e = 80 (LE), la distance h du point de rotation du bras (17, 17') du côté du boîtier pour le chemin de guidage (11) avec h $\geq$ 160 (LE) est substituée dans la formule des longueurs de bras $L_L$, pour une déviation transversale d'excentrique de translation (8) par rapport à la trajectoire de l'excentrique de translation ou du piston (10), $\Delta q_H \leq 0,005$ (LE), et
   - la longueur de la bielle de Watt (14) est telle que $L_K \geq 140$ (LE).

Fig. 4

Fig. 1

EP 0 847 481 B1

$\Delta q'_{FE}$

$0°FE$

$40°$

18

$80°$

19

$\Delta q'_{HE}$

10

22

Fig. 2

11

Stand der Technik

$\Delta q_F$

11

$0°$

21

$50°$

20

10

$80°$

$\Delta q_H$

22

Bahnkurve Kolbenmittelpunkt
Bahnkurve Koppelmittelpunkt
Kurbelwinkel alpha (1.eweg)

$\Delta q_F$

Fig. 3